# EUROPEAN PATENT APPLICATION

(11) **EP 1 108 660 A2**
(43) Date of publication of application: **20.06.2001**
(21) Application number: 00127235.0
(22) Date of filing: 15.12.2000
(51) Int. Cl.: B65G 23/36

(54) **Traction drive system**

(30) Priority: 15.12.1999 US 170941 P; 12.02.2000 US 735394
(71) Applicant: MTS SYSTEMS CORPORATION, Eden Prairie, MN 55344 (US)
(72) Inventor: Lewis, Raymond M., Chanhassen, Minnesota 55317 (US); Selingen, Jeffrey M., Plymouth, Minnesota 55442 (US)
(74) Representative: VOSSIUS & PARTNER

(57) **Abstract**

A traction drive system (10) includes an endless member (12) having a coupling (14) couplable to a vehicle. A pair of rotating wheels (16) support the endless member (12) for rotation in a closed path. A drive assembly (18) includes at least a pair of counter-rotating drive wheels (20A, 20B) wherein the drive wheels of the pair of counter-rotating drive wheels (20A, 20B) are disposed on opposite portions of the endless member (12) to apply a driving force thereto. Each drive wheel (20A, 20B) is operably coupled to a drive motor (22A, 22B).

## Description

The present invention relates to a traction drive system for accelerating and/or moving vehicles such as track-type amusement rides or launching airplanes. More particularly, the present invention relates to a pinch wheel drive system having an endless member couplable to the load.

A traction drive system includes an endless member having a coupling couplable to a vehicle. A pair of rotating wheels support the endless member for rotation in a closed path. A drive assembly includes at least a pair of counter-rotating drive wheels wherein the drive wheels of the pair of counter-rotating drive wheels are disposed on opposite portions of the endless member to apply a driving force thereto. Each drive wheel is operably coupled to a drive motor.

A second aspect of the present invention is a traction drive system having a first endless member and a second endless member. Each endless member is supported by a pair of rotating wheels for rotation in a corresponding closed path. The closed paths are parallel and adjacent to each other over a longitudinal extent. The longitudinal extent is a path for driving the vehicle.

A third aspect of the present invention is a traction drive system having a first endless belt and a second endless belt. A first pair of rotating wheels support the first endless belt for rotation in a first closed path, while a second pair of rotating wheels support the second endless belt for rotation in a second closed path. The second closed path has a longitudinal extent being parallel and adjacent to the first closed path. The first and second endless belts are secured together for travel along only the longitudinal extent to drive a corresponding vehicle.

A fourth aspect of the present invention is a traction drive system having a endless member having a coupling couplable to a vehicle. A pair of rotating wheels support the endless member for rotation in a closed path. A drive assembly comprises a plurality of pairs of counter-rotating drive wheels. The drive wheels of each pair of counter-rotating drive wheels are disposed on opposite portions of the endless member to apply a driving force thereto.

Illustrative embodiments of the invention will be described in detail in connection with the drawings.
FIG. 1 is a partial top plan view of an embodiment of a traction drive system of the present invention.
FIG. 2 is a partial top plan view of another embodiment of a traction drive system of the present invention.
FIG. 3 is a partial top plan view of yet another embodiment of a traction drive system of the present invention.
FIG. 4 is a complete top plan view of the embodiment of FIG. 3.
FIG. 5 is a side elevational view of a drive motor and drive wheel assembly.

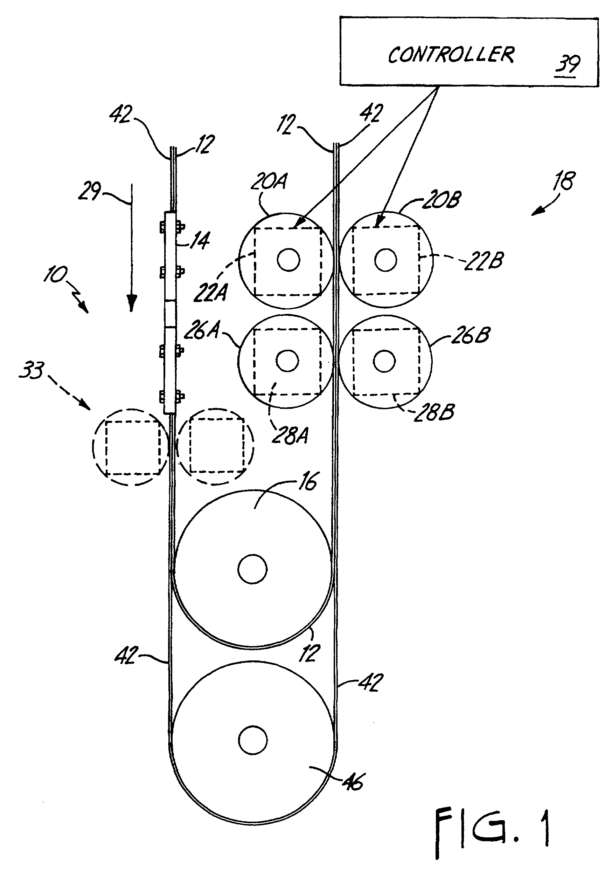

FIG. 1 illustrates one end of a first embodiment of a traction drive system 10 of the present invention. In this embodiment, the traction drive system 10 includes an endless member 12 having a coupling or shuttle 14 couplable to a vehicle (not shown) . For instance, the shuttle 14 can be couplable to an airplane, or one or more cars of a rollercoaster train, the traction driving system 10 being incorporated into or under a corresponding flight deck or track. A suitable guide track and reaction supports (not shown) can be provided for the shuttle 14 as required. Of course, other forms of vehicles may benefit from the present invention.

A pair of rotating wheels (herein exemplified as spindle-mounted drums) support the endless member 12 for rotation in a closed path. One of the rotating wheels is illustrated at 16, while the other rotating wheel is located at the other end, the other rotating wheel being substantially identical to the rotating wheel 16. A drive assembly 18 includes at least a pair of counter-rotating drive wheels 20A and 20B. The drive wheels 20A and 20B are disposed on opposite portions of the endless member 12 in order to apply a driving force thereto. In the embodiment illustrated, each drive wheel 20A and 20B is operably coupled to a drive motor 22A and 22B. A controller 39 controls energization of the motor 22A and 22B under closed loop control wherein suitable displacement and/or velocity sensors provide feedback. The drive motors 22A and 22B can be, for instance, variable speed electric motors.

The drive wheels 20A-20B can include an outer soft or compliant circumference in order to increase friction with the endless member 12. For instance, the drive wheels 20A-20B can include solid or pneumatic tires that engage the endless member 12.

It should also be noted that in an alternative embodiment one of the wheels 20A or 20B can be an idler wheel wherein a drive motor is not coupled thereto. The idler wheel provide a reaction structure for the drive wheel having the drive motor.

The drive assembly 18 efficiently and effectively rotates the endless member 12 on the rotating wheels 16 to displace the shuttle 14. The pair of drive wheels 20A and 20B effectively pinch the endless member 12 therebetween in order to apply a driving force. Since the drive wheels 20A and 20B are organized in pairs, opposite each other, the drive assembly 18 is self-reacting wherein the force of one of the drive wheels upon the endless member 12 is perpendicular to the motion of the endless member 12 and is reacted by the drive wheel on the opposite side of the endless member 12, and vise versa. In other words, the normal (pinch) force creates enough traction to convert the torque driving the drive wheels 20A and 20B into force pulling the endless member 12. The self-reacting design simplifies the support structure. The number of pairs of drive wheels engaging the endless member 12 can be selected based upon the desired performance specifications of the traction drive system 10. Although illustrated where the traction drive system 10 includes four drive wheels 20A, 20B, 26A and 26B (with corresponding drive motors 22A, 22B, 28A and 28B) as appreciated by those skilled in the art, additional drive wheel/drive motor assemblies can be included.

In the embodiment illustrated, the shuttle 14 is displaced along a longitudinal extent 29 forming a portion of a segment of the closed path between the rotating wheels 16 of the endless member 12. In a preferred embodiment, the drive assembly 18 is disposed on the closed path away from the longitudinal extent 29 of shuttle 14. In other words, the drive assembly 18 engages the endless member 12 on a portion of the closed path not forming the longitudinal extent 29. It the embodiment illustrated, the drive assembly 18 engages the endless member 12 on a segment of the closed path that is parallel to the longitudinal extent 29. In this manner, a first portion of a closed path can be used- only for movement of the shuttle 14, while a second portion is used to drive the endless member 12 so as to realize a compact structure relative to the desired length of the longitudinal extent 29 or movement of the shuttle 14. However, as appreciated by those skilled in the art, the drive assembly 18 can be disposed on the closed path in the segment between the rotating wheels 16 that also corresponds to the longitudinal extent 29. This alternative placement is illustrated in dashed lines at 33.

The endless member 12 can comprise any form of elongated member formed from metal, plastic, fiberglass or combinations thereof. Generally, the endless member 12 should include opposed portions to which the drive wheels 20A and 20B can engage, the portions generally facing away from each other. In a preferred embodiment, the endless member 12 comprises a belt having a width dimension substantially greater than a thickness dimension. The drive wheels 20A and 20B are disposed on opposite facing sides of the belt having the width dimension in order to apply a driving force thereto.

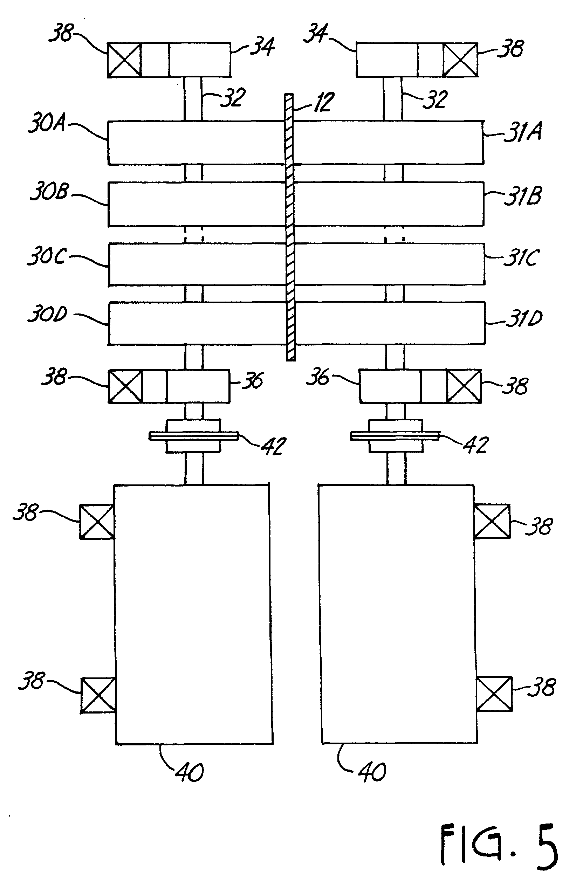

The width of the endless member 12 can be of size to accommodate one or more drive wheels. FIG. 5 illustrates a group of drive wheels 30A, 30B, 30C and 30D that engages the endless member 12 along the width dimension along one side, while a second group 31A, 313, 31C and 31D engages the endless member 12 on the opposite facing side. The drive wheels 30A-30D and 31A-31D are each coupled to an associated shaft 32 which in turn is supported by bearings 34 and 36. A single drive motor 40 drives each group of drive wheels 30A-30D and 31A-31D through a coupling 42, although in another embodiment multiple motors on a common drive shaft can be used to increase the driving power. A support structure (such as bulkheads of a ship, or supporting steel frames, etc.) indicated at 38 (the locations of which can vary from application to application)is provided to support the groups of drive wheels 30A-30D and 31A-31D and/or the motors 40.

Referring back to FIG. 1, in a further embodiment, a second endless member 42 is coupled to the first-mentioned endless member 12 so as to be effectively coupled to the shuttle 14. The second endless member 42 is supported by a second pair of rotating wheels, one of which is illustrated at 46. The second endless member 42 rotates in a second closed path that encircles the closed path of the endless member 12. The first and second members 12 and 42 are secured together for travel along only the longitudinal extent 29. The use of multiple endless members 12 and 42 and supporting rotating wheels 16 and 46 reduces the bending stresses (and drum diameters of the rotating wheels) on the endless members 12 and 42.

It should be noted that a second aspect of the present invention comprises a traction drive system having the first endless member 12, the first pair of rotating wheels 16, the second endless member 42 and the second pair of rotating wheels 46. As described above, an arrangement of the endless members 12 and 42 in this manner reduces the bending stresses on the endless members 12 and 42 as they rotate about their respective rotating wheels 16 and 46. The drum diameter of the rotating wheels 16 and 46 can also be reduced. Various drive assemblies for this aspect of the invention can be used. For instance, other forms of drive assemblies can include driving the rotating wheels 16 and 46, or use of a push rod coupled to the endless members such as at the shuttle 14.

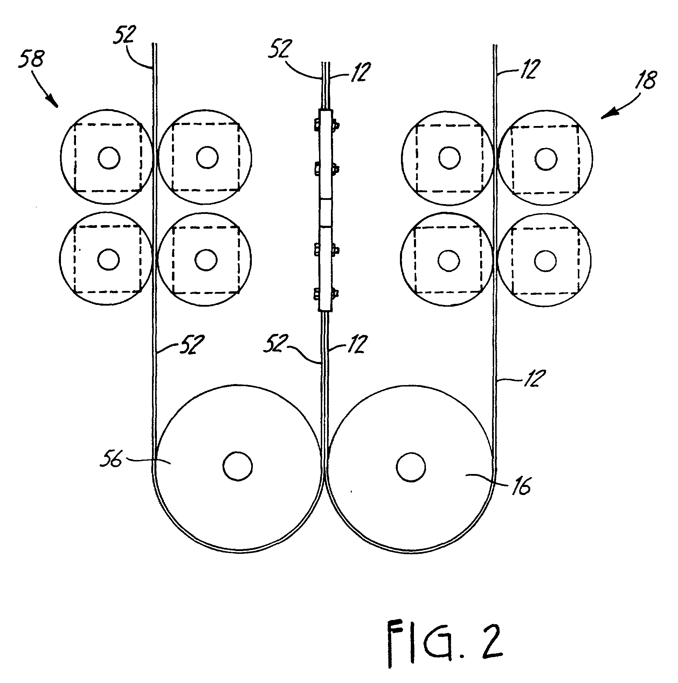

FIG. 2 illustrates another embodiment of a traction drive system of this aspect of the present invention wherein rotating wheels 56 support another endless member 52. The endless member 52 travels in a closed path having a portion that is parallel and adjacent to the closed path of the endless member 12. The endless member 52 is coupled to the endless member 12 such as at the shuttle 14. As another aspect of the present invention, a second drive assembly 58, substantially similar to the drive assembly 18 described above, can be provided to drive the endless member 52.

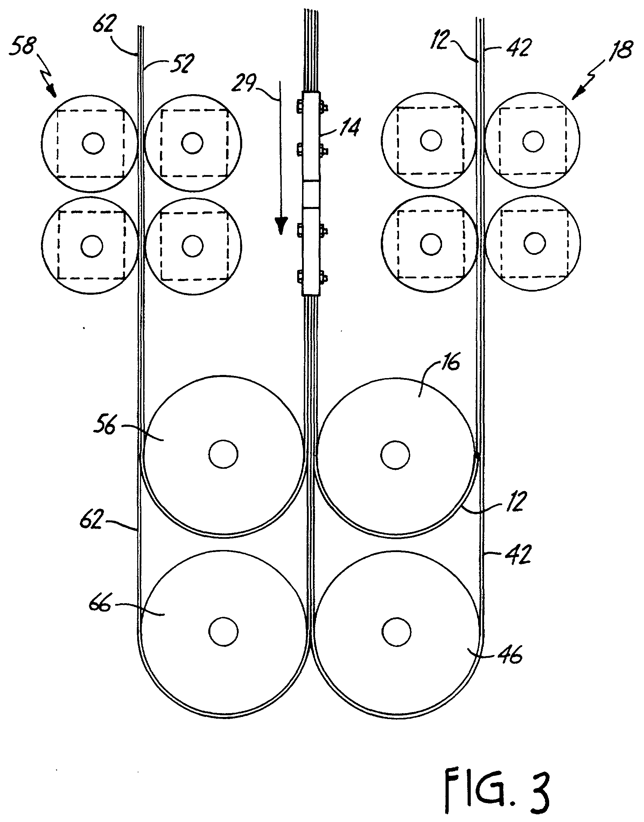

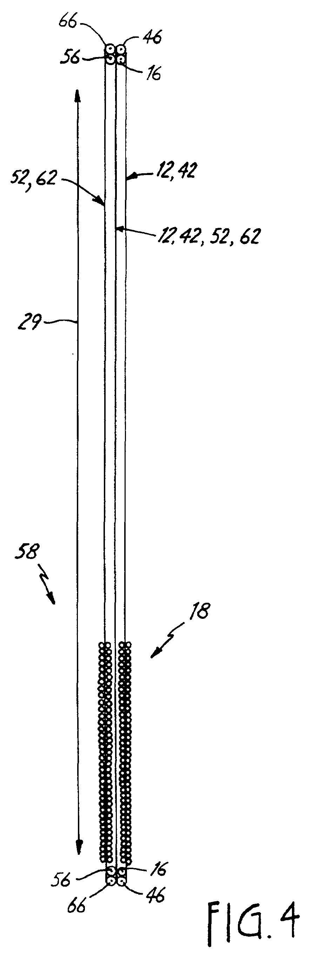

FIGS. 3 and 4 illustrate another embodiment of the traction drive system. In this embodiment, four endless members 12, 42, 52 and 62 are illustrated, although additional endless members can also be utilized. Each endless member 12, 42, 52 and 62 is supported for movement in a closed path by corresponding rotating wheels 16, 46, 56 and 66. The endless members 12, 42, 52 and 62 are positioned such that a portion of each closed path is parallel and adjacent to each other in order to form the common longitudinal extent 29. The endless members 12, 42, 52 and 62 are coupled together such as at the shuttle 14 which travels along the longitudinal extent 29. In the embodiment as illustrated, the closed path of the endless member 42 encircles the closed path of the endless member 12, while the closed path of the endless member 62 encircles the closed path of the endless member 52.

Various drive assemblies can be used to rotate the endless members 12, 42, 52 and 62 and thereby displace the shuttle 14 along the longitudinal extent. In a preferred embodiment, the drive assemblies 18 and 58 engage the endless members 12 and 42, and the endless members 52 and 62, respectively. In particular, the drive assembly 18 engages at least one and preferably both of the endless members 12 and 42 along a portion thereof not adjacent to the second endless member 52. Similarly, the drive assembly 58 engages at least one and preferably both of the endless members 52 and 62 along a portion thereof not adjacent to the endless member 12. In a preferred embodiment, the endless members 12, 42, 52 and 62 each comprise a metal belt having a width greater than the thickness. Multiple drive wheels 30A-30D and 31A-31D can be used to engage each of the pairs of endless members 12, 42, 52 and 62.

Although illustrated wherein two drive assemblies 18 and 58 are present, it should be understood that a common drive assembly positioned in the center such as illustrated in FIG. 1 can be used in any of the other embodiments as well.

Although the present invention has been described with reference to preferred embodiments, workers skilled in the art will recognize that changes may be made in form and detail without departing from the spirit and scope of the invention.

## Claims

1. A traction drive system comprising:
an endless member having a coupling couplable to a vehicle;
a pair of rotating wheels supporting the endless member for rotation in a closed path; and
a drive assembly comprising at least a pair of counter-rotating drive wheels wherein the drive wheels of the pair of counterrotating drive wheels are disposed on opposite portions of the endless member to apply a driving force thereto, and wherein each drive wheel is operably coupled to a drive motor.

2. The traction drive system of claim 1 wherein the endless member comprises a belt having a width dimension substantially greater than a thickness dimension, and wherein the drive wheels of the pair of counter rotating drive wheels are disposed on opposite facing sides of the belt having the width dimension.

3. The traction drive system of claim 2 and further comprising:
a second endless belt coupled to the first-mentioned endless belt, wherein the second endless belt has a width dimension substantially greater than a thickness dimension, and wherein a coupled portion of the first-mentioned endless belt and the second endless belt travel along a longitudinal extent to drive a vehicle; and
a second pair of rotating wheels supporting the second endless belt for rotation in a Second closed path, the second closed path encircling the first closed path.

4. The traction drive system of claim 3 and wherein the drive assembly is disposed away from the longitudinal extent to drive the vehicle.

5. The traction drive system of claim 3 or 4 and further comprising:
a third endless belt coupled to at least one of the first-mentioned endless belt and the second endless belt, wherein having a width dimension substantially greater than a thickness dimension; and
a third pair of rotating wheels supporting the third endless belt for rotation in a third closed path.

6. The traction drive system of claim 5 and further comprising:
a fourth endless belt coupled to at least one of the first-mentioned endless belt, the second endless belt and the third endless belt, having a width dimension substantially greater than a thickness dimension; and
a fourth pair of rotating wheels supporting the fourth endless belt for rotation in a fourth closed path, the fourth closed path encircling the third closed path.

7. The traction drive system of claim 6 and further comprising:
a second drive assembly comprising at least a pair of counter-rotating drive wheels wherein the drive wheels of the pair of the second counter-rotating drive wheels are disposed on opposite facing sides of the third endless belt to apply a driving force thereto.

8. A traction drive system comprising:
a first endless member;
a first pair of rotating wheels supporting the first endless member for rotation in a first closed path;
a second endless member; and
a second pair of rotating wheels supporting the second endless member for rotation in a second closed path, the second closed path having a longitudinal extent being parallel and adjacent to the first closed path, the longitudinal extent being a path for driving a vehicle couplable to at least the first endless member.

9. The traction drive system of claim 8 and further comprising:
a third endless member;
a third pair of rotating wheels supporting the third endless member for rotation in a third closed path, the third closed path having longitudinal segments being parallel and adjacent to longitudinal segments of the first closed path;
a fourth endless member; and
a fourth pair of rotating wheels supporting the fourth endless member for rotation in a fourth closed path, the fourth closed path having longitudinal segments being parallel and adjacent to longitudinal segments of the second closed path.

10. The traction drive system of claim 9 wherein the first closed path encircles the third closed path and wherein the second closed path encircles the fourth closed path.

11. The traction drive system of any of claims 8 to 10 and further comprising:
a drive assembly engaging at least one of the first and second endless members.

12. The traction drive system of claim 11 wherein the drive assembly comprises a pair of counter-rotating drive wheels engaging said at least one of the first and second endless members.

13. The traction drive system of any of claims 8 to 10 and further comprising:
a first drive assembly engaging the first endless member along a portion of the first endless member not adjacent to the second endless member; and
a second drive assembly engaging the second endless member along a portion of the second endless member not adjacent to the first endless member.

14. The traction drive system of claim 13 wherein the first drive assembly comprises a pair of counter-rotating drive wheels engaging the first endless member.

15. The traction drive system of claim 13 or 14 wherein the second drive assembly comprises a pair of counter-rotating drive wheels engaging the second endless member.

16. The traction drive system of claim 9 or 10 and further comprising:
a first drive assembly engaging at least one of the first and third endless members along a portion thereof not adjacent to the second endless member; and
a second drive assembly engaging at least one of the second and fourth endless members along a portion thereof not adjacent to the first endless member.

17. The traction drive system of claim 16 wherein the first and second drive assemblies each comprises a pair of counter-rotating drive wheels engaging the corresponding endless member.

18. The traction drive system of any of claims 8 to 17 wherein the first and second endless members each comprise a belt having a width greater than a thickness, and wherein surfaces of width of each endless members are placed adjacent to each other.

19. The traction drive system of any of claims 9 to 17 wherein the first, second, third and fourth endless members each comprise a belt having a width greater than a thickness, and wherein surfaces of width of adjacent endless members are placed adjacent to each other.

20. The traction drive system of any of claims 8 to 19 and further comprising a shuttle coupling the first and second endless members along the path for driving the vehicle.

21. The traction drive system of any of claims 9 to 19 and further comprising a shuttle coupling the first, second, third and fourth endless members along the path for driving the vehicle.

22. A traction drive system comprising:
a first endless belt;
a first pair of rotating wheels supporting the first endless belt for rotation in a first closed path;
a second endless belt secured to the first endless belt;
a second pair of rotating wheels supporting the second endless belt for rotation in a second closed path, the second closed path having a longitudinal extent being parallel and adjacent to the first closed path; and
wherein the first and second endless belts are secured together for travel along only the longitudinal extent to drive a vehicle.

23. The traction drive system of claim 22 and further comprising:
a third endless member;
a third pair of rotating wheels supporting the third endless member for rotation in a third closed path, the third closed path being encircled by the first closed path, the third closed path having longitudinal segments being parallel and adjacent to longitudinal segments of the first closed path;
a fourth endless member; and
a fourth pair of rotating wheels supporting the fourth endless member for rotation in a fourth closed path, the fourth closed path being encircled by the second closed path, the fourth closed path having longitudinal segments being parallel and adjacent to longitudinal segments of the second closed path; and
wherein the first, second, third and fourth endless belts are secured together for travel along only the longitudinal extent to drive the vehicle.

24. A traction drive system comprising:
an endless member having a coupling couplable to a vehicle;
a pair of rotating wheels supporting the endless member for rotation in a closed path; and
a drive assembly comprising a plurality of pairs of counter-rotating drive wheels wherein the drive wheels of each pair of counter-rotating drive wheels are disposed on opposite portions of the endless member to apply a driving force thereto.

25. The traction drive system of claim 24 wherein the drive assembly includes a drive motor operably coupled to each drive wheel.

26. The traction drive system of claim 24 or 25 wherein the endless member comprises a belt having a width dimension substantially greater than a thickness dimension, and wherein the drive wheels of the pair of counter-rotating drive wheels are disposed on opposite facing sides of the belt having the width dimension.

27. The traction drive system of claim 26 wherein the plurality of drive wheels comprise groups of drive wheels, each group having drive wheels engaging the endless member along the width dimension of the endless member, and wherein each group of drive wheels is driven by a drive motor.
